# EUROPÄISCHE PATENTSCHRIFT

(11) **EP 2 557 397 B1**
(45) Veröffentlichungstag und Bekanntmachung des Hinweises auf die Patenterteilung: **19.02.2014**
(21) Anmeldenummer: 11177441.0
(22) Anmeldetag: 12.08.2011
(51) Int. Cl.: G01C 21/36, G01C 21/34, G06F 3/01, G06F 3/048, G06F 3/0488

(54) **Verfahren zum Bestimmen einer Route mittels einer Navigationseinrichtung**
Method for determining a route using a navigation system
Procédé de détermination d'une route à l'aide d'un dispositif de navigation

(43) Veröffentlichungstag der Anmeldung: 13.02.2013
(73) Patentinhaber: TechniSat Digital GmbH, 54550 Daun (DE)
(72) Erfinder: Kolanko, Dipl.-Inform. (FH) Jan, 01157 Dresden (DE); Münzner, Dipl.-Math. Christian, 01309 Dresden (DE); Trentzsch, Dipl.-Inform. (FH) Torsten, 01662 Meißen (DE)

(56) Entgegenhaltungen:
- EP-A1- 1 357 359
- EP-A2- 2 063 226
- DE-A1-102008 051 051
- JP-A- 2000 111 354
- US-A1- 2008 036 743

## Beschreibung

Die Erfindung betrifft ein Verfahren zum Bestimmen einer Route mittels einer Navigationseinrichtung und eine Navigationseinrichtung zum Ausführen des Verfahrens.

Eine herkömmliche Navigationseinrichtung kann unter Verwendung von Landkartendaten eine Route berechnen, welche von einer Position der Navigationseinrichtung zu einer Zielposition führt. Der Begriff "Position" bezeichnet einen Ort auf der Erde, der bezüglich seiner räumlichen Lage durch geografische Koordinaten definiert werden kann. Die Position der Navigationseinrichtung wird meist unter Verwendung eines Satellitennavigationssystems bestimmt, beispielsweise unter Verwendung von GPS, GLONASS, COMPASS oder GALILEO. Dazu empfängt die Navigationseinrichtung mithilfe einer Satellitenantenne die Signale mehrerer geostationärer Satelliten und wertet diese Signale aus. Die Zielposition wird in der Regel aus einem Ziel bestimmt, das ein Benutzer der Navigationseinrichtung über eine Eingabeeinheit in die Navigationseinrichtung eingibt.

Die Route kann mittels einer Recheneinheit der Navigationseinrichtung bestimmt werden, welche einen Routen-Berechnungsalgorithmus ausführt. Bei der Routenberechnung werden Landkartendaten verwendet, welche Objekte und den Objekten zugeordnete Informationen repräsentieren, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften. Die Landkartendaten sind in der Regel in einer nichtflüchtigen Speichereinheit der Navigationseinrichtung abgelegt, beispielsweise auf einer CD-ROM, auf einer Festplatte oder in einem Flash-Speicher.

Nach der Routenberechnung kann die Route oder ein Abschnitt der Route auf einem der Navigationseinrichtung zugeordneten Berührungsbildschirm angezeigt werden. Dadurch kann ein Benutzer der Navigationseinrichtung eine räumliche Vorstellung von der Route oder von einem vor ihm liegenden Routenabschnitt entwickeln, was ihm beispielsweise ermöglicht, Fahrmanöver vorausschauend zu planen.

Ferner kann nach der Routenberechnung eine Zielführung gestartet werden. Als Zielführung bezeichnet man einen Prozess, der einen Benutzer der Navigationseinrichtung entlang der Route leitet. Während der Zielführung kann die Navigationseinrichtung optische und akustische Fahranweisungen an den Benutzer ausgeben, die anhand der Route und einer aktuellen Position der Navigationseinrichtung generiert werden. Falls während der Zielführung von der Route abgewichen wird oder Verkehrsstörungen auftreten, kann die Route neu berechnet werden.

Die Eingabeeinheit einer Navigationseinrichtung kann beispielsweise als Tastatur, Sprachaufnahmemodul oder Berührungsbildschirm ("Touch Display") ausgebildet sein. Das Eingeben eines gewünschten Ziels in eine Navigationseinrichtung unter Verwendung einer Tastatur oder eines Sprachaufnahmemoduls ist jedoch fehleranfällig. Neuere Navigationseinrichtungen verfügen meist über einen Berührungsbildschirm, der mit einem Eingabemittel, beispielsweise einem Finger oder einem Eingabestift, bedient werden kann. Neben einem gewünschten Ziel kann ein Benutzer mittels des Berührungsbildschirms auch Zwischenziele und Routenoptionen in eine Navigationseinrichtung eingeben.

Eine Navigationseinrichtung mit einem Berührungsbildschirm erlaubt das Eingeben eines neuen Ziels in Form einer Adresse. Zum Eingeben eines Adressbestandteils der Adresse, beispielsweise eines Ländernamens, wird auf dem Berührungsbildschirm ein Eingabefenster angezeigt, welches eine Eingabemaske und eine Mehrzahl auswählbarer Zeichen, beispielsweise Buchstaben oder Ziffern, aufweist. Ein Benutzer der Navigationseinrichtung berührt den Berührungsbildschirm an einem der Zeichen. Dadurch wird das Zeichen ausgewählt und in der Eingabemaske angezeigt. Dann berührt der Benutzer den Berührungsbildschirm an einem weiteren Zeichen, wodurch auch dieses Zeichen ausgewählt und in der Eingabemaske hinter dem zuerst ausgewählten Zeichen angezeigt wird. Danach fährt der Benutzer mit dem Auswählen weiterer Zeichen auf die gleiche Weise fort, bis alle Zeichen des Adressbestandteils ausgewählt sind, sodass der vollständige Adressbestandteil in der Eingabemaske angezeigt wird.

Anschließend kann der Benutzer den Berührungsbildschirm an einem Bestätigungsfeld berühren, sodass der eingegebene Adressbestandteil bestätigt wird. Damit ist die Eingabe des Adressbestandteils beendet und auf dem Berührungsbildschirm wird ein weiteres Eingabefenster geöffnet. In diesem Eingabefenster gibt der Benutzer einen weiteren Adressbestandteil ein, beispielsweise einen Ortsnamen, eine Postleitzahl, einen Straßennamen oder eine Hausnummer. Sobald der Benutzer alle Adressbestandteile einer Adresse eingegeben hat, ist das Eingeben des Ziels beendet.

Um die Adresseingabe zu erleichtern, kann nach dem Auswählen eines oder mehrerer Zeichen eine Liste unterschiedlicher Adressbestandteile, welche die bisher ausgewählte Zeichenfolge aufweisen, auf dem Berührungsbildschirm angezeigt werden. Die Liste kann aus den Landkartendaten der Navigationseinrichtung extrahiert werden. Der Benutzer kann einen der aufgelisteten Adressbestandteile durch das Berühren des Berührungsbildschirms an dem Adressbestandteil auswählen. Dadurch kann der Benutzer den Adressbestandteil in die Navigationseinrichtung eingeben, ohne sämtliche Zeichen des Adressbestandteils einzeln auswählen zu müssen. Wählt etwa der Benutzer beim Eingeben eines Ortsnamens die Buchstabenfolge "Stu" aus, werden alle Ortsnamen aufgelistet, die mit dieser Buchstabenfolge beginnen. Mit dem Auswählen jedes weiteren Buchstabens kann die Liste weiter eingeschränkt werden.

Um die Adresseingabe weiter zu erleichtern, können nach dem Auswählen eines oder mehrerer Zeichen für einen Adressbestandteil bestimmte Zeichen ausgeblendet werden, die nicht mehr benötigt werden. Zum Bestimmen der auszublendenden Zeichen kann beispielsweise eine Liste aller in Frage kommenden Straßennamen aus den Landkartendaten der Navigationseinrichtung extrahiert werden. Die ausgeblendeten Zeichen stehen dann nicht mehr zur Auswahl. Dadurch wird die Adresseingabe übersichtlicher gestaltet.

Ferner kann die Adresseingabe dadurch vereinfacht werden, dass ein Benutzer nur einige Zeichen einer Adresse auswählt, sodass die Adresse automatisch um die fehlenden Zeichen ergänzt wird. Beispielsweise können die ausgewählten Zeichen "Dres Zellesc 18" unter Verwendung der Landkartendaten der Navigationseinrichtung automatisch zu der vollständigen Adresse "Deutschland, Dresden, Zellescher Weg, 18" vervollständigt werden.

Alternativ zur Eingabe eines neuen Ziels als Adresse kann ein Ziel auch aus einer Liste bereits bekannter Ziele ausgewählt werden. Derartige Ziele können bereits in der Vergangenheit manuell in der Liste abgespeichert worden sein. Ferner können die bekannten Ziele auch in den Landkartendaten der Navigationseinrichtung vorliegen, beispielsweise als sogenannte "Orte von Interesse" (POls, Points of Interest).

Zusätzlich zu einem gewünschten Ziel kann ein Benutzer einer Navigationseinrichtung den ungefähren Verlauf einer zu berechnenden Route dadurch vorgeben, dass der Benutzer eine oder mehrere Routenoptionen auswählt. Derartige Routenoptionen spezifizieren die Autobahnnutzung, die Benutzung von Fähren, die Benutzung kostenpflichtiger Straßen, die Bevorzugung der kürzesten, schnellsten oder sparsamsten Strecke, usw.

Zum Auswählen einer Routenoption wird auf dem Berührungsbildschirm ein Eingabefenster mit mehreren Auswahlfeldern angezeigt, die jeweils eine Routenoption repräsentieren. Der Benutzer der Navigationseinrichtung wählt eine bestimmte Routenoption durch das Berühren des entsprechenden Auswahlfelds aus. Beispielsweise kann der Benutzer eine der Routenoptionen "Autobahnen bevorzugt nutzen", "Autobahnen normal nutzen", "Autobahnen wenig nutzen" und "Autobahnen meiden" auswählen, um den Grad der Autobahnnutzung vorzugeben. Eine auf diese Weise eingestellte Routenoption kann in einer Speichereinheit der Navigationseinrichtung abgelegt werden, um die Routenoption als Voreinstellung für zukünftige Routenberechnungen verwenden zu können.

Außer dem Ziel und den Routenoptionen kann ein Benutzer auch ein Zwischenziel oder mehrere Zwischenziele in die Navigationseinrichtung eingeben. Die Route wird dann derart berechnet, dass die Route durch das Zwischenziel beziehungsweise durch die Zwischenziele führt. Das Eingeben der Zwischenziele wird auf die gleiche Weise vorgenommen, wie das oben beschriebene Eingeben des Ziels.

Trotz der oben genannten Erleichterungen ist das Eingeben einer Route in eine Navigationseinrichtung unter Verwendung eines Berührungsbildschirms bisher kompliziert und zeitaufwendig. Ein gewünschtes Ziel, zugehörige Routenoptionen und eventuelle Zwischenziele müssen getrennt eingegeben werden. Dazu muss der Benutzer der Navigationseinrichtung eine Mehrzahl von Eingaben in mehreren Eingabefenstern vornehmen, wobei mehrere Untermenüs aufgerufen werden. Ferner kann der ungefähre Routenverlauf mittels der Routenoptionen nur sehr grob vorgegeben werden. Weiterhin kann es beim Auswählen einzelner Zeichen auf dem Berührungsbildschirm leicht zu Eingabefehlern kommen, beispielsweise indem der Benutzer den Berührungsbildschirm versehentlich an der falschen Stelle berührt.

Die Patentanmeldung EP1357359A1 beschreibt ein graphisch interaktives Verfahren zur Bestimmung einer Route für ein Kraftfahrzeug zwischen einem Start- und einem Zielpunkt in einem Kraftfahrzeugnavigationssystem mit einer optischen Ausgabeeinheit, die zur Darstellung einer Karte geeignet ist.

Die Patentanmeldung JP20001 11 354A offenbart ein Navigationsgerät mit einem Berührungsbildschirm, mit dem eine von einem Benutzer eingegebene Linie detektiert wird und ein darauf basierender Passagepfad spezifiziert wird.

Die Patentanmeldung EP2063226A2 beschreibt ein Verfahren zum Definieren eines geografischen Bereichs in einem Kartenausschnitt, bei dem eine ausgewählte Bereichsform auf dem Kartenausschnitt positioniert wird und eine Funktion eines Navigationsgeräts abhängig von einem durch die Bereichsform bestimmten geografischen Bereich ausgeführt wird.

Vor diesem Hintergrund stellt sich die Aufgabe, ein Verfahren bereitzustellen, welches das Eingeben eines Ziels und eines ungefähren Routenverlaufs in eine Navigationseinrichtung vereinfacht, beschleunigt und weniger fehleranfällig macht und außerdem ein genaueres Vorgeben des Routenverlaufs ermöglicht.

Die Aufgabe wird mit dem erfindungsgemäßen Verfahren zum Bestimmen einer Route mittels einer Navigationseinrichtung mit einem Berührungsbildschirm entsprechend Anspruch 1 gelöst. Das erfindungsgemäße Verfahren weist folgende Schritte auf:
(1) Bestimmen einer Position der Navigationseinrichtung,
(2) Anzeigen eines Landkartenausschnitts auf dem Berührungsbildschirm,
(3) Führen eines Eingabemittels auf dem Berührungsbildschirm von einem Eingabestartpunkt entlang einer Eingabelinie bis zu einem Eingabeendpunkt,
(4) Definieren einer der Eingabelinie zugeordneten Referenzlinie,
(5) Definieren eines entlang der Referenzlinie verlaufenden Routenkorridors, sodass die Referenzlinie innerhalb des Routenkorridors verläuft,
(6) Bestimmen einer dem Eingabeendpunkt zugeordneten Zielposition und
(7) Berechnen der Route, sodass die Route von der Position der Navigationseinrichtung zu der Zielposition führt und entlang der Referenzlinie innerhalb des Routenkorridors verläuft, wobei die Breite des Routenkorridors an jeder der Referenzpositionen auf der Referenzlinie von einem Druck abhängt, der beim Führen des ersten Eingabemittels, an dem der Referenzposition zugeordneten Punkt auf der Eingabelinie, mit dem ersten Eingabemittel auf den Berührungsbildschirm ausgeübt wurde.

Das Verfahren ermöglicht das komfortable Eingeben einer nutzerindividuellen Route in eine Navigationseinrichtung, indem lediglich ein Eingabemittel auf dem Berührungsbildschirm der Navigationseinrichtung entlangführt wird. Damit kann ein Benutzer der Navigationseinrichtung sowohl das gewünschte Ziel als auch den ungefähren Routenverlauf und eine Routenoption in einem einzigen Schritt vorgeben. Die Zielposition wird mittels eines Punkts spezifiziert, an dem das Eingabemittel von dem Berührungsbildschirm entfernt wird. Der ungefähre Routenverlauf und die Routenoption werden mittels der Eingabelinie spezifiziert, entlang der das Eingabemittel auf dem Berührungsbildschirm geführt wird.

Somit wird das aufwendige Eingeben von Zieladresse und Routenoption gemäß bekannter Verfahren durch eine benutzerfreundlichere Methode ersetzt. Insbesondere ermöglicht die Erfindung das Vorgeben des ungefähren Routenverlaufs in vergleichsweise kurzer Zeit, wobei der ungefähre Routenverlauf genauer als bei bekannten Verfahren vorgegeben wird. Darüber hinaus werden Eingabefehler vermieden, die bei bisher bekannten Verfahren durch das versehentliche Auswählen falscher Zeichen, beispielsweise Buchstaben und Ziffern, zustande kommen.

Neben dem erfindungsgemäßen Verfahren wird auch eine Navigationseinrichtung zum Ausführen des erfindungsgemäßen Verfahrens entsprechend Anspruch 13 bereitgestellt. Die Navigationsonrichtung weist folgende Bestandteile auf:
(1) eine Positionsbestimmungseinheit, die zum Bestimmen einer Position der Navigationseinrichtung eingerichtet ist,
(2) einen Berührungsbildschirm, der zum Anzeigen eines Landkartenausschnitts eingerichtet ist, und
(3) eine Recheneinheit, die zum Definieren einer Referenzlinie, welche einer Eingabelinie zugeordnet ist, entlang der ein Eingabemittel auf dem Berührungsbildschirm von einem Eingabestartpunkt zu einem Eingabeendpunkt geführt wird, zum Definieren eines entlang der Referenzlinie verlaufenden Routenkorridors, sodass die Referenzlinie innerhalb des Routenkorridors angeordnet ist, zum Bestimmen einer dem Eingabeendpunkt zugeordneten Zielposition und zum Berechnen einer Route eingerichtet ist, sodass die Route von der Position der Navigationseinrichtung zu der Zielposition führt und entlang der Referenzlinie innerhalb des Routenkorridors verläuft, wobei die Breite des Routenkorridors an jeder der Referenzpositionen auf der Referenzlinie von einem Druck abhängt, der beim Führen des ersten Eingabemittels, an dem der Referenzposition zugeordneten Punkt auf der Eingabelinie, mit dem ersten Eingabemittel auf den Berührungsbildschirm ausgeübt wurde.

Ausführungsformen der Erfindung sind in den abhängigen Patentansprüchen beschrieben.

Im Folgenden wird die Erfindung anhand von Figuren weiter erläutert, welche Folgendes darstellen:
Figur 1 zeigt einen Landkartenausschnitt zum Erläutern einer ersten Ausführungsform des erfindungsgemäßen Verfahrens.
Figur 2 zeigt einen Landkartenausschnitt zum Erläutern einer zweiten Ausführungsform des erfindungsgemäßen Verfahrens.
Figur 3 zeigt einen Landkartenausschnitt zum Erläutern einer dritten Ausführungsform des erfindungsgemäßen Verfahrens.
Figur 4 zeigt einen Landkartenausschnitt und einen Teilbereich des Landkartenausschnitts zum Erläutern einer vierten Ausführungsform des erfindungsgemäßen Verfahrens.
Figur 5 zeigt einen Landkartenausschnitt zum Erläutern einer fünften Ausführungsform des erfindungsgemäßen Verfahrens.

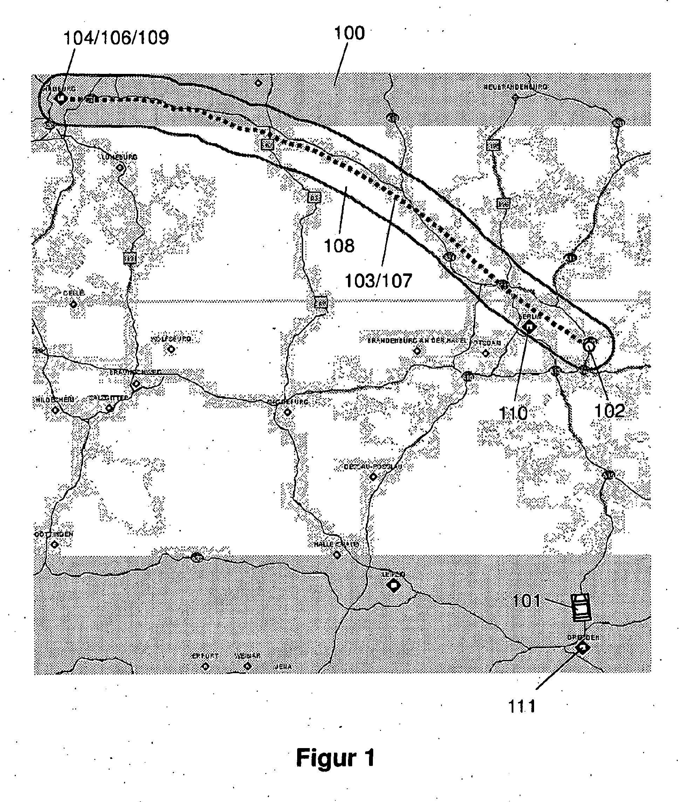

Im Folgenden wird bezugnehmend auf **Figur 1** eine erste Ausführungsform des erfindungsgemäßen Verfahrens erläutert.

Eine Navigationseinrichtung zum Ausführen der ersten Ausführungsform des erfindungsgemäßen Verfahrens weist eine Positionsbestimmungseinheit, einen Berührungsbildschirm und eine Recheneinheit auf. Die Positionsbestimmungseinheit weist einen Satellitenempfänger auf, der mit einer Satellitenantenne verbunden ist, beispielsweise mit einer GPS-Antenne. Ferner ist die Recheneinheit ein Mikroprozessor. Neben den genannten Bestandteilen weist die Navigationseinrichtung noch weitere Bestandteile auf, beispielsweise eine mit der Recheneinheit verbundene Speichereinheit, in welcher Landkartendaten abgelegt sind. Die Landkartendaten können bei Bedarf in einen Arbeitsspeicher der Recheneinheit geladen und dort weiterverarbeitet werden.

Bei einem ersten Verfahrensschritt wird in einer aus dem Stand der Technik bekannten Weise die Position der Navigationseinrichtung 101 bestimmt, welche sich bei der vorliegenden Ausführungsform der Erfindung nördlich der Stadt Dresden 111 auf der Autobahn A13 befindet. Dazu berechnet die Positionsbestimmungseinheit aus empfangenen Satellitensignalen Positionsdaten und liefert die Positionsdaten an die Recheneinheit.

Bei einem zweiten Verfahrensschritt wird ein (in Figur 1 nicht gezeigter) Landkartenausschnitt in einem vorgegebenen Maßstab auf dem Berührungsbildschirm dargestellt. Optional ist der Maßstab durch einen Benutzer der Navigationseinrichtung voreinstellbar. Im vorliegenden Fall wird der Landkartenausschnitt unter Verwendung der Recheneinheit derart ausgewählt, dass der Landkartenausschnitt ein Gebiet repräsentiert, welches die Position der Navigationseinrichtung 101 umgibt, wobei die Position der Navigationseinrichtung 101 etwa in der Mitte des Landkartenausschnitts angeordnet ist. Alternativ dazu kann der Landkartenausschnitt jedoch auch so ausgewählt werden, dass die Position der Navigationseinrichtung nicht in dem vom Landkartenausschnitt repräsentierten Gebiet angeordnet ist.

Dann wird die Position der Navigationseinrichtung 101 als ein Symbol auf dem Berührungsbildschirm dargestellt. Dazu wird zunächst der Position der Navigationseinrichtung 101 unter Verwendung der Recheneinheit ein Punkt auf dem Berührungsbildschirm zugeordnet. Dann wird das Symbol an dem Punkt auf dem Berührungsbildschirm eingeblendet. Im vorliegenden Fall hat das Symbol die Form einer stilisierten Draufsicht auf einen PKW. Daher wird das Symbol als "Fahrzeugsymbol" oder "Carsor" bezeichnet. Alternativ dazu kann die Position der Navigationseinrichtung 101 auch als ein anderes Symbol dargestellt werden, beispielsweise als ein Kreuz, ein Kreis, eine stilisierte Person oder eine Pfeilspitze.

Generell erfolgt die Zuordnung eines Punktes auf dem Berührungsbildschirm zu einer Position in dem vom Landkartenausschnitt repräsentierten Gebiet derart, dass geografische Koordinaten, welche die Lage der Position in dem von dem Landkartenausschnitt repräsentierten Gebiet spezifizieren, auf lokale Koordinaten, welche die Lage des Punktes auf dem Berührungsbildschirm spezifizieren, abgebildet werden. Umgekehrt kann eine Position in dem vom Landkartenausschnitt repräsentierten Gebiet einem Punkt auf dem Berührungsbildschirm derart zugeordnet werden, dass die lokalen Koordinaten des Punkts auf geografische Koordinaten der Position abgebildet werden.

Im vorliegenden Fall verschiebt ein Benutzer der Navigationseinrichtung den ursprünglich angezeigten Landkartenausschnitt mitsamt dem Fahrzeugsymbol und verändert den Maßstab, sodass der in Figur 1 dargestellte Landkartenausschnitt 100 angezeigt wird. Der Landkartenausschnitt 100 enthält außer der Position der Navigationseinrichtung 101 auch das von dem Benutzer gewünschte Ziel, nämlich die Stadt Hamburg 109, welche von einem quadratförmigen Symbol repräsentiert wird.

Alternativ dazu kann der Benutzer der Navigationseinrichtung einen ursprünglich angezeigten Landkartenausschnitt auch unverändert lassen, beispielsweise wenn der Landkartenausschnitt bereits das gewünschte Ziel aufweist oder der Benutzer den Landkartenausschnitt erst später verschieben möchte, beispielsweise bei einem dritten Verfahrensschritt.

Bei dem dritten Verfahrensschritt wird ein Eingabemittel auf dem Berührungsbildschirm von einem Eingabestartpunkt 102 entlang einer Eingabelinie 103 bis zu einem Eingabeendpunkt 104 geführt. Dazu setzt der Benutzer der Navigationseinrichtung einen seiner Finger auf den Berührungsbildschirm auf, lässt den Finger auf dem Berührungsbildschirm entlanggleiten und entfernt dann seinen Finger von dem Berührungsbildschirm. Mit dem Entfernen seines Fingers von dem Berührungsbildschirm an dem Eingabeendpunkt 104 kennzeichnet der Benutzer das gewünschte Ziel. Alternativ zu seinem Finger kann der Benutzer auch ein anderes Eingabemittel verwenden, beispielsweise einen Eingabestift.

Abweichend von der in Figur 1 dargestellten Situation kann es notwendig sein, einen angezeigten Landkartenausschnitt auf dem Berührungsbildschirm während des Ausführens des dritten Verfahrensschritts zu verschieben. Dies ist beispielsweise dann der Fall, wenn eine Eingabelinie durch einen außerhalb des angezeigten Landkartenausschnitts befindlichen Landkartenbereich verlaufen soll.

Dazu kann der Benutzer ein zweites Eingabemittel, beispielsweise einen zweiten Finger, auf den Berührungsbildschirm aufsetzen, sodass ein Verschiebemodus gestartet wird. Verschiebt nun der Benutzer das erste Eingabemittel auf dem Berührungsbildschirm, wird der angezeigte Landkartenausschnitt entsprechend verschoben. Das heißt, der Landkartenausschnitt wird derart verschoben, dass das erste Eingabemittel während des Verschiebevorgangs an der gleichen Stelle des Landkartenausschnitts verbleibt. Ein Fahrzeugsymbol und ein möglicherweise auf dem Berührungsbildschirm dargestellter Routenkorridor oder eine möglicherweise dargestellte Referenzlinie (siehe unten) werden ebenfalls entsprechend verschoben.

Während des Verschiebevorgangs kann das zweite Eingabemittel mitbewegt werden, es muss aber nicht. Das zweite Eingabemittel dient lediglich zum Starten beziehungsweise Beenden des Verschiebemodus. Durch Entfernen des zweiten Eingabemittels vom Berührungsbildschirm kann der Verschiebemodus beendet werden. Danach kann der Benutzer das erste Eingabemittel weiter entlang der Eingabelinie führen und so den weiteren Verlauf des Routenkorridors vorgeben. Der Vorteil dieser Verfahrensweise besteht darin, dass das erste Eingabemittel während des Verschiebens auf dem Berührungsbildschirm aufgesetzt bleibt, wodurch das verfrühte Kennzeichnen eines Ziels vermieden wird.

Im vorliegenden Fall ist der Eingabestartpunkt 102 rechts von einem quadratförmigen Symbol angeordnet, welches die Stadt Berlin 110 repräsentiert. Die als Punktlinie dargestellte Eingabelinie 103 verläuft entlang zweier Linien, welche die Bundesautobahn A10 (Berliner Ring) und die Bundesautobahn A24 repräsentieren. Der Eingabeendpunkt 104 ist innerhalb des quadratförmigen Symbols angeordnet, welches die Stadt Hamburg 109 repräsentiert.

Bei einem vierten Verfahrensschritt wird eine der Eingabelinie 103 zugeordnete Referenzlinie 107 definiert, welche in dem vom Landkartenausschnitt 100 repräsentierten Gebiet verläuft. In Figur 1 stimmt die Darstellung der Referenzlinie 107 mit der Darstellung der Eingabelinie 103 überein. Die Referenzlinie 107 kann als Aneinanderreihung einer unendlichen Anzahl von Referenzpositionen charakterisiert werden, die jeweils einem Punkt auf der Eingabelinie 103 zugeordnet sind. Im vorliegenden Fall wird die Referenzlinie 107 derart definiert, dass zunächst mehreren auf der Eingabelinie 103 angeordneten Punkten jeweils eine Referenzposition zugeordnet wird. Die Referenzpositionen werden dann durch mehrere aneinandergereihte Linien miteinander verbunden, welche die Referenzlinie 107 bilden.

Die Zuordnung einer Position in dem Gebiet, das von dem Landkartenausschnitt repräsentiert wird, zu einem Punkt auf dem Berührungsbildschirm erfolgt derart, dass lokale Koordinaten, welche die Lage des Punktes auf dem Berührungsbildschirm spezifizieren, auf geografische Koordinaten abgebildet werden, welche die Lage der Position in dem von dem Landkartenausschnitt repräsentierten Gebiet spezifizieren.

Bei einem fünften Verfahrensschritt wird ein entlang der Referenzlinie 107 verlaufender Routenkorridor 108 definiert, welcher derart ausgebildet ist, dass die Referenzlinie 107 vollständig innerhalb des Routenkorridors 108 verläuft. Im vorliegenden Fall ist der Routenkorridor 108 als ein Streifen ausgebildet, welcher entlang der Referenzlinie 107 eine konstante Breite von etwa 25 Kilometern aufweist. Ein Routenkorridor kann jedoch auch eine andere Breite aufweisen, beispielsweise eine Breite von 5, 10, 20 oder 50 Kilometern. Erfindungsgemäß kann die Breite des Routenkorridors an jeder der Referenzpositionen vom Benutzer der Navigationseinrichtung in Abhängigkeit von einem Druck der beim Führen des ersten Eingabemittels auf den Berührungsbildschirm ausgeübt wurde, vorgegeben werden.

Der Routenkorridor 108 ist so angeordne, dass die Referenzlinie 107 in der Mitte des Routenkorridors 108 verläuft. Die an den Enden der Referenzlinie 107 angeordneten Enden des Routenkorridors 108 besitzen die Form von Halbkreisen, deren Mittelpunkte von den Enden der Referenzlinie 107 gebildet werden. Aufgrund dieser Gestaltung des Routenkorridors 108 weist jede der Referenzpositionen der Referenzlinie einen minimalen Abstand von etwa 12,5 Kilometern zur Grenze des Routenkorridors 108 auf.

Alternativ dazu kann ein Routenkorridor auch eine andere Form aufweisen. Der Routenkorridor kann beispielsweise eine entlang einer Referenzlinie variierende Breite haben oder anstelle von halbkreisförmigen Enden mit geraden Enden oder mit offenen Enden versehen sein. Des Weiteren kann der Routenkorridor auch ellipsenförmig ausgebildet sein.

Optional kann ein Routenkorridor oder eine Referenzlinie zumindest teilweise auf dem Berührungsbildschirm angezeigt werden, während ein Eingabemittel auf dem Berührungsbildschirm entlang einer Eingabelinie geführt wird. Insbesondere kann der Routenkorridor soweit dargestellt werden, wie er auf der Basis eines zu diesem Zeitpunkt vorliegenden Abschnitts der Eingabelinie definierbar ist. Gleiches gilt für die Referenzlinie.

Bei einem sechsten Verfahrensschritt wird anhand des Punkts, an dem der Benutzer seinen Finger von dem Berührungsbildschirm entfernt hat (Eingabeendpunkt 104), eine Zielposition 106 bestimmt. Mit anderen Worten wird dem Eingabeendpunkt 104 die Zielposition 106 zugeordnet. Dazu wird zunächst unter Verwendung der Recheneinheit geprüft, ob der Eingabeendpunkt 104 in einem auf dem Berührungsbildschirm angezeigten Symbol angeordnet ist, welches eine Gemeinde repräsentiert. Die Gemeinde kann beispielsweise eine Stadt, ein Dorf oder eine andere politisch-geografische Verwaltungseinheit sein.

Im vorliegenden Fall wird bei der Prüfung festgestellt, dass der Eingabeendpunkt 104 innerhalb des quadratförmigen Symbols angeordnet ist, welches die Stadt Hamburg 109 repräsentiert. Daher wird die Zielposition 106 im Zentrum der Stadt Hamburg 109 angeordnet, beispielsweise an der Binnenalster.

Alternativ dazu kann auf dem Berührungsbildschirm auch eine Liste mit Adressen angezeigt werden, welche der Stadt Hamburg zugeordnet sind. Nach dem Auswählen einer der Adressen durch den Benutzer wird die Zielposition anhand der ausgewählten Adresse bestimmt. Auf diese Weise lässt sich die Zielposition besonders genau bestimmen. Die Adressen der Liste können in der Speichereinheit der Navigationseinrichtung oder in einer Speichereinheit eines externen Geräts, welches mit der Navigationseinrichtung über eine Datenverbindung gekoppelt ist, abgelegt sein.

Sollte dagegen der Eingabeendpunkt nicht innerhalb eines auf dem Berührungsbildschirm angezeigten Symbols angeordnet sein, welches eine Gemeinde repräsentiert, würde dem Eingabeendpunkt eine Referenzposition zugeordnet und geprüft, ob die Referenzposition in einem befahrbaren Bereich angeordnet ist, beispielsweise auf einer Straße oder auf einem Parkplatz. In diesem Fall würde die Zielposition mit der Referenzposition gleichgesetzt, das heißt, die Positionsdaten der Referenzposition würden der Zielposition zugeordnet.

Sollte allerdings die dem Eingabeendpunkt zugeordnete Referenzposition nicht in einem befahrbaren Bereich angeordnet sein, würde die Zielposition derart bestimmt, dass die Zielposition im nächstgelegenen befahrbaren Bereich angeordnet wird. Mit anderen Worten würde die Zielposition in einem befahrbaren Bereich angeordnet, welcher die kürzeste Entfernung zu der Referenzposition von allen befahrbaren Bereichen aufweist.

Bei einem siebenten Verfahrensschritt wird eine Route berechnet, sodass die Route von der Position der Navigationseinrichtung 101 zu der Zielposition 106 führt und entlang der Referenzlinie 107 innerhalb des Routenkorridors 108 verläuft. Dazu wird zunächst geprüft, ob die Position der Navigationseinrichtung 101 außerhalb des Routenkorridors 108 angeordnet ist. Diese Prüfung kann unter Verwendung der Recheneinheit anhand der Koordinaten der Position der Navigationseinrichtung 101 und der Koordinaten des Routenkorridors 108 vorgenommen werden. Im vorliegenden Fall führt die Prüfung zu dem Ergebnis, dass die Position der Navigationseinrichtung 101 außerhalb des Routenkorridors 108 angeordnet ist. Die Position der Navigationseinrichtung 101 befindet sich nämlich in der Nähe der Stadt Dresden 111.

Deshalb wird unter Verwendung der Recheneinheit und der Landkartendaten zunächst ein erster Routenabschnitt berechnet. Der erste Routenabschnitt führt von der Position der Navigationseinrichtung 101 bis in die Nähe einer Anfangsposition der Referenzlinie 107, welche dem Eingabestartpunkt 102 zugeordnet ist. Der erste Routenabschnitt kann beispielsweise bis in einen Bereich führen, der die Form eines Kreises hat, dessen Durchmesser gleich der Breite des Routenkorridors 108 ist und dessen Mittelpunkt die Anfangsposition der Referenzlinie 107 bildet. Abweichend davon kann der Bereich jedoch auch eine andere Form aufweisen. Dann wird ein zweiter Routenabschnitt berechnet, welcher sich an den ersten Routenabschnitt anschließt und innerhalb des Routenkorridors 108 entlang der Referenzlinie 107 bis zur Zielposition 106 führt.

Die auf diese Weise berechnete Route verläuft von der Position der Navigationseinrichtung 101 auf der Bundesautobahn A13 nördlich von Dresden 111 über die Bundesautobahn A13, die östliche Bundesautobahn A10, die Bundesautobahn A24 und das Hamburger Stadtgebiet bis an die Hamburger Binnenalster.

Sollte im Gegensatz zu dem geschilderten Fall die Position einer Navigationseinrichtung innerhalb eines Routenkorridors angeordnet sein, würde eine Route derart berechnet, dass die gesamte Route innerhalb des Routenkorridors verliefe.

Wie die erste Ausführungsform des erfindungsgemäßen Verfahrens verdeutlicht, ermöglicht die Erfindung das komfortable Eingeben einer nutzerindividuellen Route in die Navigationseinrichtung, indem lediglich das Eingabemittel auf dem Berührungsbildschirm entlanggeführt wird. Damit kann der Benutzer der Navigationseinrichtung sowohl das Ziel als auch den ungefähren Routenverlauf in einem einzigen Schritt spezifizieren. Insbesondere ermöglicht die Erfindung das Vorgeben des ungefähren Routenverlaufs in vergleichsweise kurzer Zeit, wobei der ungefähre Routenverlauf genauer als bei bekannten Verfahren vorgegeben werden kann. Darüber hinaus werden Eingabefehler vermieden, die bei bisher bekannten Verfahren durch das versehentliche Auswählen falscher Zeichen, beispielsweise Buchstaben und Ziffern, zustande kommen.

Abweichend von der beschriebenen Vorgehensweise kann eine Route, deren ungefährer Verlauf durch einen Routenkorridor vorgegeben ist, auch derart berechnet werden, dass ein entlang einer Referenzlinie verlaufender Routenabschnitt den Routenkorridor in einem Ausnahmefall verlässt. Ein solcher Ausnahmefall liegt vor, wenn kein innerhalb des Routenkorridors angeordneter Straßenbereich existiert, der vom Anfang bis zum Ende des Routenkorridors durchgängig befahrbar ist.

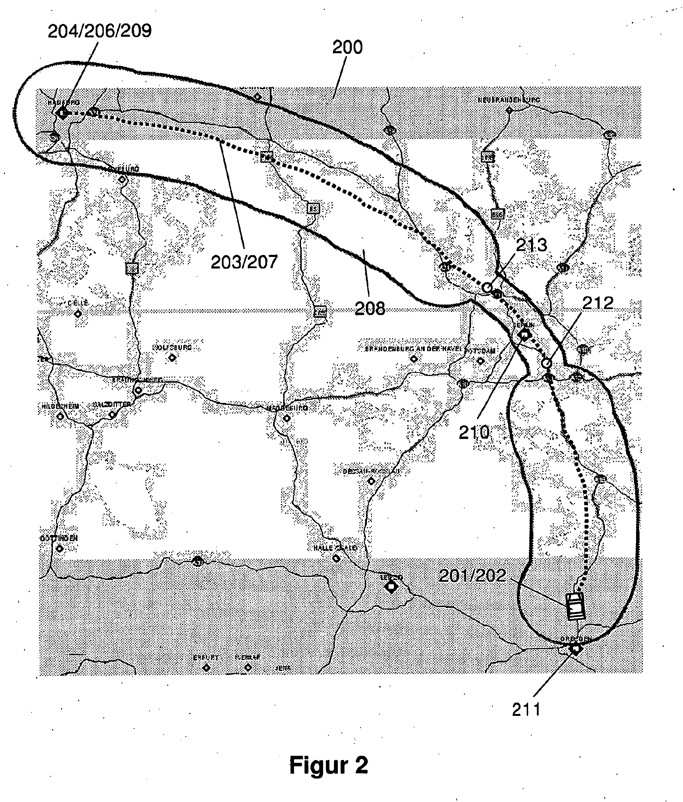

Im Folgenden wird bezugnehmend auf **Figur 2** eine zweite Ausführungsform des erfindungsgemäßen Verfahrens erläutert.

Eine Navigationseinrichtung zum Ausführen der zweiten Ausführungsform des erfindungsgemäßen Verfahrens weist die gleichen Bestandteile auf, wie die oben beschriebene Navigationseinrichtung zum Ausführen der ersten Ausführungsform. Erfindungsgemäß ist der Berührungsbildschirm derart eingerichtet, dass sich mittels des Berührungsbildschirms die Größe eines Druckes erfassen lässt, welcher mittels eines Eingabemittels auf den Berührungsbildschirm ausgeübt wird. Zu diesem Zweck kann der Berührungsbildschirm mit geeigneten Sensoren, beispielsweise mit Drucksensoren, ausgestattet sein.

Bei einem ersten Verfahrensschritt wird, in der gleichen Weise wie bei der ersten Ausführungsform der Erfindung, die Position der Navigationseinrichtung bestimmt.

Bei einem zweiten Verfahrensschritt wird, in der gleichen Weise wie bei der ersten Ausführungsform der Erfindung, ein Landkartenausschnitt auf dem Berührungsbildschirm angezeigt.

Dann wird, in der gleichen Weise wie bei der ersten Ausführungsform der Erfindung, die Position der Navigationseinrichtung 201 als ein Fahrzeugsymbol auf dem Berührungsbildschirm dargestellt. Danach verschiebt ein Benutzer der Navigationseinrichtung den Landkartenausschnitt mitsamt dem Fahrzeugsymbol und verändert den Maßstab, sodass der in Figur 2 dargestellte Landkartenausschnitt 200 angezeigt wird.

Bei einem dritten Verfahrensschritt wird ein Eingabemittel auf dem Berührungsbildschirm von einem Eingabestartpunkt 202 entlang einer Eingabelinie 203 bis zu einem Eingabeendpunkt 204 geführt. Der Eingabestartpunkt 202 ist an der angezeigten Position der Navigationseinrichtung 201 angeordnet, also oberhalb eines Symbols der Stadt Dresden 211. Die als Punktlinie dargestellte Eingabelinie 203 verläuft entlang mehrerer Linien, welche die Bundesautobahn A13, die Bundesautobahnen A113, A100 und A111, die Bundesautobahn A10 (Berliner Ring) und die Bundesautobahn A24 repräsentieren. Der Eingabeendpunkt 204 ist in einem quadratförmigen Symbol angeordnet, welches die Stadt Hamburg 209 repräsentiert.

Der Benutzer der Navigationseinrichtung übt beim Führen des Eingabemittels auf der Eingabelinie 203 unterschiedlich große Drücke auf den Berührungsbildschirm aus. Ein solcher Druck ist zwischen dem Eingabestartpunkt 202 und einem Punkt 212 sowie zwischen einem Punkt 213 und dem Eingabeendpunkt 204 vergleichsweise gering. Dagegen ist ein solcher Druck zwischen den Punkten 212 und 213 vergleichsweise groß.

Bei einem vierten Verfahrensschritt wird, in der gleichen Weise wie bei der ersten Ausführungsform der Erfindung, eine der Eingabelinie 203 zugeordnete Referenzlinie 207 in dem von dem Landkartenausschnitt 200 repräsentierten Gebiet definiert.

Bei einem fünften Verfahrensschritt wird ein entlang der Referenzlinie 207 verlaufender Routenkorridor 208 definiert, welcher derart ausgebildet ist, dass die Referenzlinie 207 etwa in der Mitte des Routenkorridors 208 verläuft. Außerdem ist der Routenkorridor 208 derart ausgebildet, dass die Breite des Routenkorridors 208 an jeder auf der Referenzlinie 207 angeordneten Referenzposition von dem Druck abhängt, der an einem der Referenzposition zugeordneten Punkt der Eingabelinie mittels des Eingabemittels auf den Berührungsbildschirm ausgeübt wurde.

Daher weist der Routenkorridor 208 drei Routenkorridorabschnitte unterschiedlicher Breite auf. Der erste Routenkorridorabschnitt erstreckt sich von der Stadt Dresden 211 bis zu einer dem Punkt 212 zugeordneten Referenzposition. Der zweite Routenkorridorabschnitt erstreckt sich von der dem Punkt 212 zugeordneten Referenzposition bis zu einer dem Punkt 213 zugeordneten Referenzposition. Der dritte Routenkorridorabschnitt erstreckt sich von der dem Punkt 213 zugeordneten Referenzposition bis zu einer Position westlich von Hamburg 209. Während der erste Routenkorridorabschnitt und der dritte Routenkorridorabschnitt jeweils eine Breite von etwa 50 Kilometern aufweisen, hat der zweite Routenkorridorabschnitt eine Breite von lediglich etwa 17 Kilometern. Das ist darauf zurückzuführen, dass der Druck des Eingabemittels auf den Berührungsbildschirm zwischen den Punkten 212 und 213 höher war als an den anderen Bereichen der Eingabelinie 203.

Es wird darauf hingewiesen, dass der Routenkorridor 208 derart ausgebildet ist, dass sich ein in der Nähe der Stadt Hamburg 209 angeordneter Teil des Routenkorridors außerhalb des Gebiets befindet, das von dem Landkartenausschnitt 200 repräsentiert wird. Dieser Teil des Routenkorridors 208 wird nicht auf dem Berührungsbildschirm angezeigt.

Bei einem sechsten Verfahrensschritt wird, in der gleichen Weise wie bei der ersten Ausführungsform der Erfindung, eine dem Eingabeendpunkt 204 zugeordnete Zielposition 206 bestimmt.

Bei einem siebenten Verfahrensschritt wird eine Route berechnet, sodass die Route von der Position der Navigationseinrichtung zu der Zielposition 206 führt. Da die Position der Navigationseinrichtung 201 innerhalb des Routenkorridors 208 angeordnet ist, verläuft die gesamte Route innerhalb des Routenkorridors 208.

Wegen der variierenden Breite des Routenkorridors 208 bestehen für den Verlauf der Route in jedem der drei Routenkorridorabschnitte unterschiedliche Restriktionen. Während im ersten Routenkorridorabschnitt und im dritten Routenkorridorabschnitt die Route über Straßenabschnitte geführt werden darf, welche weniger als circa 25 Kilometer von der Referenzlinie 207 entfernt sind, darf die Route im zweiten Routenkorridorabschnitt nur über Straßenabschnitte geführt werden, welche weniger als circa 8,5 Kilometer von der Referenzlinie 207 entfernt sind.

Die auf diese Weise berechnete Route führt von der Position der Navigationseinrichtung auf der Bundesautobahn A13 nördlich von Dresden über die Bundesautobahn A13, die Bundesautobahnen A113, A100 und A111, die Bundesautobahn A10, die Bundesautobahn A24 und das Hamburger Stadtgebiet bis an die Hamburger Binnenalster. Wegen der oben beschriebenen Gestaltung des Routenkorridors 208, sodass dieser im Bereich der Stadt Berlin 210 eine verringerte Breite aufweist, führt die Route nicht über den östlichen Berliner Ring (Bundesautobahn A10), sondern stattdessen über die Bundesautobahnen A113, A100 und A111 quer durch das nicht dargestellte Stadtgebiet von Berlin 210.

Wie die zweite Ausführungsform des erfindungsgemäßen Verfahrens verdeutlicht, kann der Benutzer durch den Druck, den er mit dem Eingabemittel auf den Berührungsbildschirm ausübt, die Breite des Routenkorridors vorgeben. Beispielsweise kann der Benutzer den Routenkorridor durch Erhöhung des Drucks schmaler machen und so seine Vorgabe für den Routenverlauf verfeinern. Auf diese Weise kann eine bestimmte Straße vorgegeben werden, durch die eine zu berechnende Route führen soll. Andererseits kann der Benutzer den Routenkorridor durch Verringerung des Drucks breiter machen und damit seine Vorgaben für den Routenverlauf allgemeiner fassen.

Abweichend davon ist aber auch eine Lösung denkbar, bei welcher der Benutzer den Routenkorridor durch Erhöhung des Drucks, den er mit dem Eingabemittel auf den Berührungsbildschirm ausübt, breiter macht, sodass die Vorgaben für den Routenverlauf allgemeiner gefasst werden. In diesem Fall macht der Benutzer den Routenkorridor durch Verringerung des Drucks schmaler, sodass seine Vorgabe für den Routenverlauf verfeinert wird.

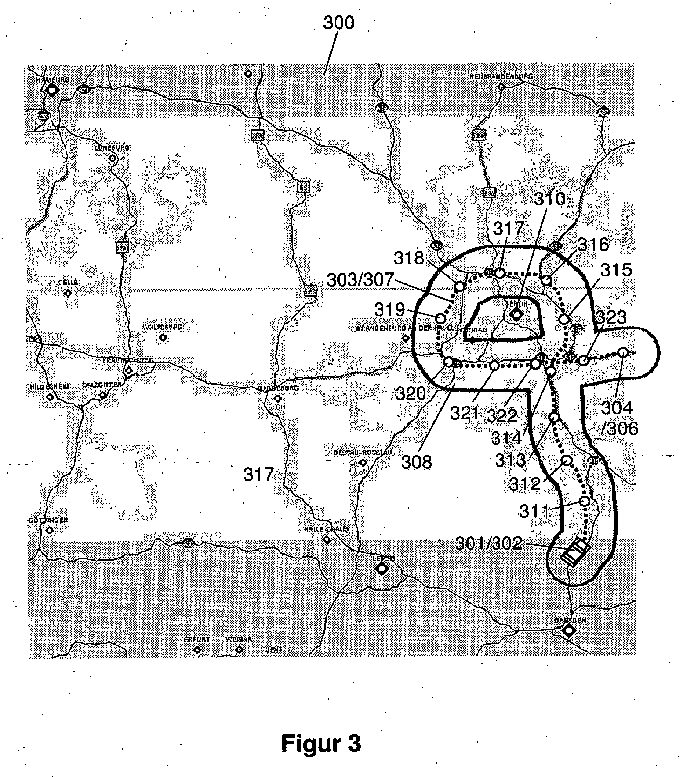

Im Folgenden wird bezugnehmend auf **Figur 3** eine dritte Ausführungsform des erfindungsgemäßen Verfahrens erläutert.

Eine Navigationseinrichtung zum Ausführen der dritten Ausführungsform des erfindungsgemäßen Verfahrens weist die gleichen Bestandteile auf, wie die oben beschriebene Navigationseinrichtung zum Ausführen der ersten Ausführungsform.

Bei einem ersten Verfahrensschritt wird, in der gleichen Weise wie bei der ersten Ausführungsform der Erfindung, die Position der Navigationseinrichtung 301 bestimmt.

Bei einem zweiten Verfahrensschritt wird, in der gleichen Weise wie bei der ersten Ausführungsform der Erfindung, ein Landkartenausschnitt auf dem Berührungsbildschirm angezeigt.

Dann wird, in der gleichen Weise wie bei der ersten Ausführungsform der Erfindung, die Position der Navigationseinrichtung 301 als ein Fahrzeugsymbol auf dem Berührungsbildschirm dargestellt. Danach verschiebt ein Benutzer der Navigationseinrichtung den Landkartenausschnitt mitsamt dem Fahrzeugsymbol und verändert den Maßstab, sodass der in Figur 3 dargestellte Landkartenausschnitt 300 angezeigt wird.

Bei einem dritten Verfahrensschritt wird ein Eingabemittel auf dem Berührungsbildschirm von einem Eingabestartpunkt 302 entlang einer Eingabelinie 303 bis zu einem Eingabeendpunkt 304 geführt. Dazu setzt der Benutzer der Navigationseinrichtung das Eingabemittel an der angezeigten Position der Navigationseinrichtung 301 auf den Berührungsbildschirm auf und führt das Eingabemittel zunächst bis zu einem Punkt rechts von einem quadratförmigen Symbol, welches die Stadt Berlin 310 repräsentiert. Anschließend führt der Benutzer das Eingabemittel entgegen dem Uhrzeigersinn um das Symbol der Stadt Berlin 310 herum und dann nach rechts auf die angezeigte Bundesautobahn A12, wo der Benutzer das Eingabemittel von dem Berührungsbildschirm entfernt.

Die resultierende, als Punktlinie dargestellte Eingabelinie 303 verläuft entlang mehrerer Linien des Landkartenausschnitts 300, welche die Bundesautobahnen A13, A10 und A12 repräsentieren. Der Eingabeendpunkt 304 ist auf der Linie der Bundesautobahn A12 angeordnet. In der Nähe des Schönefelder Kreuzes, an dem die Bundesautobahn A13 auf die Bundesautobahn A10 trifft, kreuzt die Eingabelinie 303 sich selbst.

Bei dem oben beschriebenen Führen des Eingabemittels auf dem Berührungsbildschirm werden mehrere auf der Eingabelinie 303 angeordnete Eingabelinienpunkte 311 bis 323 definiert. Jedem der Eingabelinienpunkte 311 bis 323 wird ein Zeitpunkt zugeordnet, zu welchem der Punkt von dem Eingabemittel passiert wird. Anhand der Zeitpunkte lässt sich später die Reihenfolge ermitteln, in welcher das Eingabemittel die Eingabelinienpunkte 311 bis 323 passiert hat. Im vorliegenden Fall passiert das Eingabemittel die Eingabelinienpunkte 311 bis 323 in folgender Reihenfolge:
311 → 312 → 313 → 314 → 315 → 315 - 316 → 317 → 318 → 319 → 320 → 321 → 322 → 323

Die Anzahl der Eingabelinienpunkte kann von der in Figur 1 gezeigten Anzahl von Eingabelinienpunkten abweichen. Außerdem können die Eingabelinienpunkte während des Führens des Eingabemittels auf der Eingabelinie in gleichen Zeitabständen gesetzt werden, wobei jeder der Eingabelinienpunkte dort angeordnet wird, wo sich das Eingabemittel gerade befindet. Ein solcher Zeitabstand beträgt typischerweise 1/2 Sekunde, 1/8 Sekunde, 1/16 Sekunde, 1/25 Sekunde oder 1/50 Sekunde. Beispielsweise können bei einem Zeitabstand von 1/25 Sekunde 25 Eingabelinienpunkte pro Sekunde generiert werden. Alternativ dazu können die Eingabelinienpunkte in gleichen Entfernungen voneinander auf der Eingabelinie angeordnet werden. Eine solche Entfernung entspricht typischerweise einer Entfernung von 1 Kilometer, 500 Metern, 100 Metern oder 10 Metern in dem vom Landkartenausschnitt 300 repräsentierten Gebiet. Abweichend davon können der Zeitabstand beziehungsweise die Entfernung auch variiert werden, sodass in Abhängigkeit vom Verlauf einer Eingabelinie eine ausreichende Anzahl von Eingabelinienpunkten generiert wird.

Bei einem vierten Verfahrensschritt wird, in der gleichen Weise wie bei der ersten Ausführungsform der Erfindung, eine der Eingabelinie 303 zugeordnete Referenzlinie 307 in dem vom Landkartenausschnitt 300 repräsentierten Gebiet definiert. Ferner wird jedem der Eingabelinienpunkte 311 bis 323 eine auf der Referenzlinie 307 angeordnete Referenzposition zugeordnet.

Bei einem fünften Verfahrensschritt wird ein entlang der Referenzlinie 307 verlaufender Routenkorridor 308 definiert, welcher derart ausgebildet ist, dass die Referenzlinie 307 in der Mitte des Routenkorridors 308 verläuft. Aufgrund des Verlaufs der Referenzlinie 307, welche sich selbst kreuzt, ist der Routenkorridor 308 schleifenförmig ausgebildet.

Bei einem sechsten Verfahrensschritt wird eine dem Eingabeendpunkt 304 zugeordnete Zielposition 306 bestimmt. Da der Eingabeendpunkt 304 nicht innerhalb eines auf dem Berührungsbildschirm angezeigten Symbols angeordnet ist, welches eine Gemeinde repräsentiert, und eine dem Eingabeendpunkt 304 zugeordnete Referenzposition in einem befahrbaren Bereich, nämlich auf der Bundesautobahn A12, angeordnet ist, wird die Zielposition 306 mit der Referenzposition gleichgesetzt. Das heißt, die Positionsdaten der Referenzposition werden der Zielposition 306 zugeordnet.

Wäre dagegen die dem Eingabeendpunkt zugeordnete Referenzposition nicht in einem befahrbaren Bereich angeordnet, würde die Zielposition derart bestimmt, dass die Zielposition in einem befahrbaren Bereich angeordnet würde, welcher bezüglich der dem Eingabeendpunkt zugeordneten Referenzposition der nächstgelegene befahrbare Bereich ist.

Bei einem siebenten Verfahrensschritt wird eine Route berechnet, sodass die Route innerhalb des Routenkorridors 308 von der Position der Navigationseinrichtung 301 zu der Zielposition 306 führt. Insbesondere wird die Route mit einem speziellen Rechenalgorithmus derart berechnet, dass die Route die den Eingabelinienpunkten 311 bis 323 zugeordneten Referenzpositionen in der gleichen Reihenfolge passiert, in welcher das Eingabemittel die entsprechenden Eingabelinienpunkte 311 bis 323 passiert hat. Im vorliegenden Fall wird die Reihenfolge, in welcher das Eingabemittel die Eingabelinienpunkte 311 bis 323 passiert hat, anhand der den Eingabelinienpunkten 311 bis 323 zugeordneten Zeitpunkte ermittelt.

Der Ausdruck "Passieren einer Referenzposition" ist in diesem Zusammenhang derart zu verstehen, dass die Route durch eine Ebene verläuft, auf welcher die Referenzposition liegt, wobei die Ebene derart angeordnet ist, dass die Referenzlinie senkrecht aus der Ebene tritt. Somit kann die Route eine Referenzposition passieren, indem sie direkt durch die Referenzposition verläuft oder nahe an der Referenzposition vorbeiführt.

Folglich wird die Route so berechnet, dass sie die Referenzpositionen in der folgenden Reihenfolge passiert:
Referenzposition von 311 → Referenzposition von 312 → Referenzposition von 313 → Referenzposition von 314 → Referenzposition von 315 → Referenzposition von 316 → Referenzposition von 317 → Referenzposition von 318 → Referenzposition von 319 → Referenzposition von 320 → Referenzposition von 321 → Referenzposition von 322 → Referenzposition von 323

Eine Referenzposition muss nicht zwangsläufig auf einer befahrbaren Straße oder auf einem Abschnitt einer Straße liegen, der als Bestandteil einer zu berechnenden Route geeignet ist. Ferner muss die Route die Referenzpositionen in der Reihenfolge passieren, in der die Eingabelinie durch die entsprechenden Referenzpunkte geführt wurde. Dazu wird während der Berechnung der Route geprüft, ob eine gerade betrachtete Referenzposition schon von einem Abschnitt der Route passiert wird, welcher bereits berechnet wurde. Die Prüfung kann beispielsweise durchgeführt werden, indem festgestellt wird, ob die Referenzposition eine spezielle Markierung aufweist. Eine solche Markierung wird jeder der Referenzpositionen zugeordnet, sobald sie von einem bereits berechneten Abschnitt der Route passiert wird. Die Markierung kann beispielsweise in der Speichereinheit der Navigationseinrichtung zusammen mit Positionsdaten der Referenzposition abgelegt werden. Wird bei der Prüfung festgestellt, dass die gerade betrachtete Referenzposition eine solche Markierung aufweist, wird anstelle dieser Referenzposition die nächste Referenzposition betrachtet. Mit anderen Worten wird die ursprünglich betrachtete Referenzposition bei der weiteren Berechnung ignoriert. Auf diese Weise wird das Berechnen der Route fortgesetzt, bis die Route die Zielposition erreicht.

Aufgrund der beschriebenen Vorgehensweise unter Verwendung der Eingabelinienpunkte 311 bis 323 und der ihnen zugeordneten Referenzpositionen wird vermieden, dass die Route derart berechnet wird, dass sie auf dem kürzesten Weg innerhalb des Routenkorridors 308 von der Position der Navigationseinrichtung 301 zu der Zielposition 306 führt. Eine solche Route würde nämlich nicht, wie von dem Benutzer der Navigationseinrichtung gewünscht, um die Stadt Berlin 310 herumführen, sondern beispielsweise auf der Bundesautobahn A13 bis zum Schönefelder Kreuz und dann über die Bundesautobahn A10 in östlicher Richtung auf die Bundesautobahn A12. Folglich würde die Route nicht den gesamten Routenkorridor 308 durchlaufen.

Gemäß der dritten Ausführungsform des erfindungsgemäßen Verfahrens kann der Benutzer der Navigationseinrichtung einen gewünschten ungefähren Routenverlauf auch dann genau vorgeben, wenn die Route sich selbst kreuzen soll.

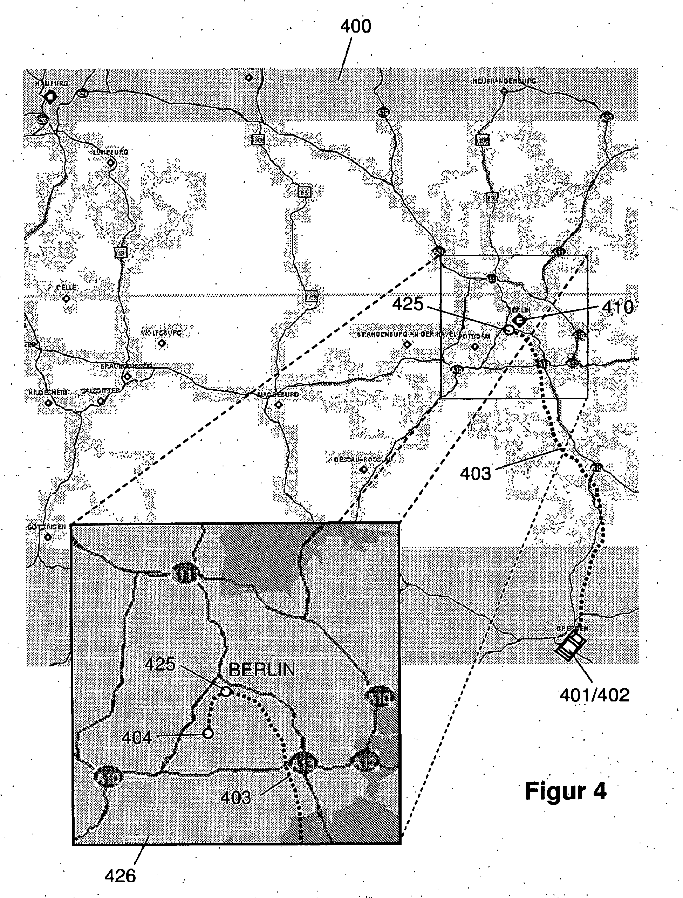

Im Folgenden wird bezugnehmend auf **Figur 4** erläutert, wie der Maßstab, in welchem ein Landkartenausschnitt 400 angezeigt wird, gemäß einer vierten Ausführungsform des erfindungsgemäßen Verfahrens verändert werden kann.

Die Navigationseinrichtung zum Ausführen der vierten Ausführungsform des erfindungsgemäßen Verfahrens weist die gleichen Bestandteile auf, wie die oben beschriebene Navigationseinrichtung zum Ausführen der ersten Ausführungsform. Zusätzlich ist die Navigationseinrichtung derart eingerichtet, dass sich mittels der Navigationseinrichtung erfassen lässt, ob ein Eingabemittel auf dem Berührungsbildschirm bewegt wird. Zu diesem Zweck kann die Recheneinheit der Navigationseinrichtung mit einer speziellen Software ausgestattet sein.

Figur 4 zeigt im Hintergrund einen auf dem Berührungsbildschirm der Navigationseinrichtung dargestellten Landkartenausschnitt 400 und im Vordergrund einen Teilbereich des Landkartenausschnitts 426, welcher anstelle des Landkartenausschnitts 400 auf dem Berührungsbildschirm dargestellt werden kann.

Bei einem dritten Verfahrensschritt des erfindungsgemäßen Verfahrens wird ein Eingabemittel auf dem Berührungsbildschirm von einem Eingabestartpunkt 402 entlang einer Eingabelinie 403 bis zu einem Eingabeendpunkt 404 geführt. Dazu setzt der Benutzer der Navigationseinrichtung das Eingabemittel an einem Fahrzeugsymbol, welches eine vorher bestimmte Position der Navigationseinrichtung 401 repräsentiert, auf den Berührungsbildschirm auf und führt das Eingabemittel bis in den Bereich der Stadt Berlin 410. Dann stoppt der Benutzer das Eingabemittel an einer Stelle des Landkartenausschnitts 425, das heißt, der Benutzer reduziert die Geschwindigkeit des Eingabemittels auf Null. Anschließend bewegt der Benutzer das Eingabemittel während einer vorgegebenen Zeitdauer, beispielsweise während 1 Sekunde, nicht. Nach Ablauf der Zeitdauer startet die Navigationseinrichtung einen Zoommodus, welcher im Folgenden beschrieben wird (auch in dem Zoommodus bewegt der Benutzer das Eingabemittel nicht).

In dem Zoommodus wird der Maßstab des angezeigten Landkartenausschnitts vergrößert, wobei das Eingabemittel auf dieselbe Stelle des Landkartenausschnitts gerichtet bleibt. Mit anderen Worten wird an dem Punkt, an welchem das Eingabemittel den Berührungsbildschirm berührt, in den Landkartenausschnitt "hineingezoomt". Dadurch wird die Darstellung des Landkartenausschnitts 400 auf dem Berührungsbildschirm durch die Darstellung des Teilbereichs des Landkartenausschnitts 426 ersetzt. Mit anderen Worten wird anstelle des Landkartenausschnitts 400 der Teilbereich 426 auf dem Berührungsbildschirm eingeblendet.

Der Maßstab, in dem der Teilbereich 426 angezeigt wird, ist größer als der Maßstab, in dem der Landkartenausschnitt 400 angezeigt wurde. Daraus folgt, dass das von dem Teilbereich 426 repräsentierte Gebiet kleiner als das von dem Landkartenausschnitt 400 repräsentierte Gebiet ist. Der Teilbereich 426 wird ferner derart auf dem Berührungsbildschirm angeordnet, dass das erste Eingabemittel an der Stelle 425 verbleibt, an der es gestoppt wurde. Dadurch weist das Eingabemittel sowohl vor als auch nach Einblenden des Teilbereichs 426 auf die gleiche Stelle des Landkartenausschnitts 425 und damit auch auf die gleiche Position des Gebiets, welches dem Landkartenausschnitt zugeordnet ist.

Der Zoommodus wird beendet, indem der Benutzer das Eingabemittel auf dem Berührungsbildschirm weiterbewegt. Der Benutzer führt das Eingabemittel bis zu dem Eingabeendpunkt 404, wo er das Eingabemittel von dem Berührungsbildschirm entfernt. Damit ist der dritte Verfahrensschritt beendet.

Die vierte Ausführungsform des erfindungsgemäßen Verfahrens ermöglicht dem Benutzer der Navigationseinrichtung, ein gewünschtes Ziel noch genauer zu spezifizieren. Durch das "Hineinzoomen" in den Landkartenausschnitt 400 kann der Benutzer den Eingabeendpunkt 404 besonders exakt definieren und damit das gewünschte Ziel genauer vorgeben.

Optional kann der Übergang von der Anzeige eines Landkartenausschnitts zu der Anzeige eines Teilbereichs des Landkartenausschnitts allmählich erfolgen. Dazu wird nach dem Stoppen des Eingabemittels auf dem Berührungsbildschirm der Maßstab des angezeigten Landkartenausschnitts langsam vergrößert. Mit anderen Worten wird an der Stelle, an der das Eingabemittel gestoppt wurde, allmählich "in den Landkartenausschnitt hineingezoomt", wobei der Übergang stufenlos oder mehrstufig erfolgen kann. Diese Option erlaubt dem Benutzer der Navigationseinrichtung das einfache Einstellen eines Maßstabs, in welchem der Landkartenausschnitt auf dem Berührungsbildschirm angezeigt werden soll.

Alternativ zum Starten des Zoommodus durch Stoppen des Eingabemittels kann der Zoommodus auch gestartet werden, indem ein zweites Eingabemittel auf den Berührungsbildschirm aufgesetzt wird und dann auf dem Berührungsbildschirm verschoben wird, ohne das erste Eingabemittel zu verschieben. Beispielsweise wird, wenn beim Verschieben des zweiten Eingabemittels die Entfernung zwischen dem ersten Eingabemittel und dem zweiten Eingabemittel vergrößert wird, der Maßstab vergrößert. Mit anderen Worten wird an der Stelle, an welcher das erste Eingabemittel den Berührungsbildschirm berührt, in den Landkartenausschnitt "hineingezoomt", so wie oben beschrieben. Andererseits wird, wenn die Entfernung zwischen dem erstem Eingabemittel und dem zweitem Eingabemittel vermindert wird, der Maßstab verkleinert. Mit anderen Worten wird an der Stelle, an welcher das erste Eingabemittel den Berührungsbildschirm berührt, aus dem Landkartenausschnitt "herausgezoomt". Der Zoommodus kann durch das Entfernen des zweiten Eingabemittels von dem Berührungsbildschirm beendet werden.

Alternativ zu der bisher beschriebenen Vorgehensweise kann ein vergrößerter Teilbereich eines Landkartenausschnitts auch in einem kleineren Bildformat als der Landkartenausschnitt auf dem Berührungsbildschirm eingeblendet werden, wobei der Landkartenausschnitt hinter dem Teilbereich des Landkartenausschnitts angezeigt wird.

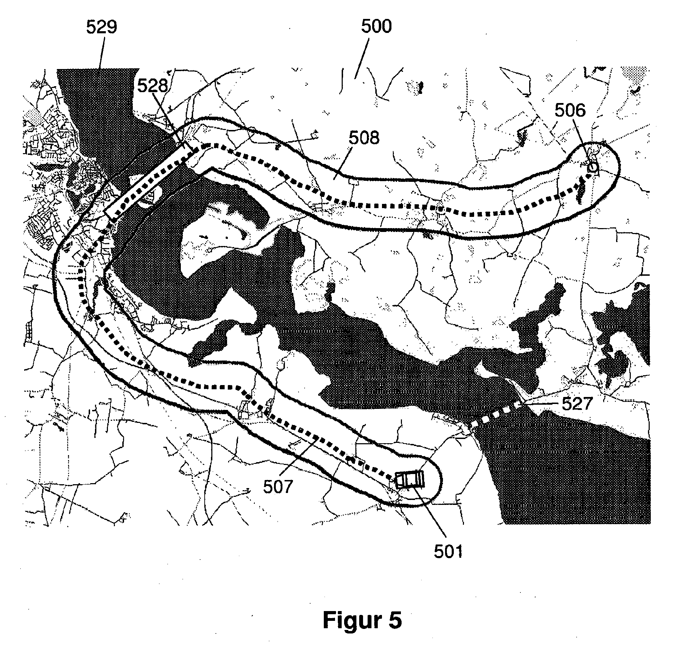

Im Folgenden wird bezugnehmend auf **Figur 5** das Einstellen einer Routenoption einer Navigationseinrichtung gemäß einer fünften Ausführungsform des erfindungsgemäßen Verfahrens erläutert.

Die Navigationseinrichtung zum Ausführen der fünften Ausführungsform des erfindungsgemäßen Verfahrens weist die gleichen Bestandteile auf, wie die oben beschriebene Navigationseinrichtung zum Ausführen der ersten Ausführungsform. Eine Routenoption "Fähren meiden" der Navigationseinrichtung ist zunächst deaktiviert, sodass die Benutzung von Fähren erlaubt ist.

Figur 5 zeigt einen auf dem Berührungsbildschirm der Navigationseinrichtung dargestellten Landkartenausschnitt 500, der ein Gebiet repräsentiert, welches unter anderem eine Meerenge 529 aufweist. Ferner ist eine Referenzlinie 507 dargestellt, welche von einer Position der Navigationseinrichtung 501, die von einem Fahrzeugsymbol repräsentiert wird, zu einer Zielposition 506 führt. Die Position der Navigationseinrichtung 501 und die Zielposition 506 sind auf gegenüberliegenden Seiten der Meerenge angeordnet. Die Referenzlinie 507 wurde bei einem vierten Verfahrensschritt des erfindungsgemäßen Verfahrens definiert, während die Zielposition 506 bei einem sechsten Verfahrensschritt bestimmt wurde.

Ferner ist ein Routenkorridor 508 gezeigt, welcher die Referenzlinie 507 umgibt und bei einem fünften Verfahrensschritt bestimmt wurde. Des Weiteren zeigt Figur 5 eine durch eine punktierte Linie repräsentierte Fährverbindung 527, welche beide Seiten der Meerenge miteinander verbindet und außerhalb des Routenkorridors 508 angeordnet ist.

Die Referenzlinie 507 überquert die Meerenge 529 an einer innerhalb des Routenkorridors 508 angeordneten Brücke 528, welche die Meerenge 529 überspannt. Deshalb wird bei einem siebenten Verfahrensschritt eine Route (nicht gezeigt), welche die Position der Navigationseinrichtung 501 mit der Zielposition 506 verbindet, derart berechnet, dass die Route über die Brücke 528 führt.

Zusätzlich wird eine Vergleichsroute (nicht gezeigt) berechnet, welche ebenfalls von der Position der Navigationseinrichtung 501 zu der Zielposition 506 führt. Im Gegensatz zu der vorher berechneten Route ist für die Vergleichsroute kein Routenkorridor vorgegeben. Beim Berechnen der Vergleichsroute wird aber die oben genannte Routenoption berücksichtigt, gemäß der die Benutzung von Fähren erlaubt ist. Infolgedessen wird die Vergleichsroute derart berechnet, dass die Vergleichsroute über die Fährverbindung 527 führt, aber nicht über die Brücke 528. Diese Vergleichsroute repräsentiert die kürzeste und schnellste Straßenverbindung zwischen der Position der Navigationseinrichtung 501 und der Zielposition 506.

Die Route wird mit der Vergleichsroute verglichen, sodass ein Vergleichsergebnis bereitgestellt wird. Gemäß dem Vergleichsergebnis ist die Route deutlich länger als die Vergleichsroute, führt aber über eine Brücke, während die Vergleichsroute über eine Fährverbindung führt. Aus dem Vergleichsergebnis wird geschlussfolgert, dass der Benutzer der Navigationseinrichtung zukünftig Fährverbindungen meiden möchte. Daher wird die Routenoption "Fähre meiden" aktiviert. Mit anderen Worten wird die Routenoption, gemäß welcher die Benutzung von Fähren erlaubt ist, durch eine Routenoption ersetzt, gemäß welcher Fähren zu meiden sind.

Die Routenoption "Fähre meiden" wird dann unter Verwendung der Recheneinheit in der Speichereinheit abgespeichert und steht damit als Voreinstellung für spätere Routenberechnungen zur Verfügung. Eine derartige spätere Routenberechnung kann beispielsweise dann ausgeführt werden, wenn Verkehrshindernisse ein Neuberechnen der Route erfordern.

Wäre im Gegensatz zu dem betrachteten Fall die Routenoption "Fähre meiden" aktiviert gewesen und eine auf der Basis eines Routenkorridors berechnete Route würde über die Fährverbindung 527 geführt, würde die Routenoption "Fähre meiden" deaktiviert.

Die fünfte Ausführungsform des erfindungsgemäßen Verfahrens ermöglicht dem Benutzer der Navigationseinrichtung, in einem einzigen Schritt und auf besonders einfache Weise neben einem gewünschten Ziel und einem ungefähren Routenverlauf auch eine Routenoption vorzugeben, welche zukünftig beim Berechnen weiterer Routen verwendet werden soll.

Optional muss der Benutzer der Navigationseinrichtung die neue Routenoption "Fähre meiden" bestätigen, bevor diese Routenoption aktiviert wird. Dafür kann ein spezielles Bildschirmfenster (beispielsweise ein "Pop-up"-Fenster) auf dem Berührungsbildschirm angezeigt werden, welches neben der Routenoption ein "Bestätigen"-Feld und ein "Ablehnen"-Feld aufweist. Durch Berühren des "Bestätigen"-Feldes kann der Benutzer die Routenoption bestätigen, sodass die Routenoption aktiviert wird. Durch Berühren des "Ablehnen"-Feldes kann der Benutzer die Routenoption ablehnen, sodass die Routenoption nicht aktiviert wird.

Alternativ zu den genannten Routenoptionen, welche die Benutzung von Fähren betreffen, können mit der Methode gemäß der fünften Ausführungsform des erfindungsgemäßen Verfahrens auch andere Routenoptionen eingestellt werden, beispielsweise solche, welche die Autobahnnutzung, die Benutzung kostenpflichtiger Straßen oder die Bevorzugung der kürzesten, schnellsten oder sparsamsten Strecke betreffen.

So kann der Benutzer beispielsweise ohne weitere Einstellungen Autobahnen meiden, indem er eine Eingabelinie derart auf dem Berührungsbildschirm platziert, dass sie in einer ausreichenden Entfernung von einer normalerweise verwendeten Autobahn verläuft, die auf dem Berührungsbildschirm angezeigt wird.

## Patentansprüche

1. Verfahren zum Bestimmen einer Route mittels einer Navigationseinrichtung, welche einen Berührungsbildschirm aufweist, mit den Schritten:
Bestimmen einer Position der Navigationseinrichtung (101),
Anzeigen eines Landkartenausschnitts (100) auf dem Berührungsbildschirm,
Führen eines ersten Eingabemittels auf dem Berührungsbildschirm von einem Eingabestartpunkt (102) entlang einer Eingabelinie (103) bis zu einem Eingabeendpunkt (104),
Definieren einer Referenzlinie (107), welche in dem vom Landkartenausschnitt (100) repräsentierten Gebiet verläuft und als Aneinanderreihung einer unendlichen Anzahl von Referenzpositionen ausgebildet ist, denen jeweils ein Punkt auf der Eingabelinie (103) derart zugeordnet ist, dass geografische Koordinaten, welche die Lage der Referenzposition in dem Gebiet spezifizieren, auf lokale Koordinaten, welche die Lage des Punktes auf dem Berührungsbildschirm spezifizieren, abbildbar sind,
Definieren eines entlang der Referenzlinie (107) verlaufenden Routenkorridors (108), sodass die Referenzlinie (107) innerhalb des Routenkorridors (108) und etwa in der Mitte des Routenkorridors (108) verläuft,
Bestimmen einer Zielposition (106) unter Verwendung des Eingabeendpunktes (104) und
Berechnen der Route, sodass die Route von der Position der Navigationseinrichtung (101) zu der Zielposition (106) führt und entlang der Referenzlinie (107) innerhalb des Routenkorridors (108) verläuft, **dadurch gekennzeichnet, dass**
die Breite des Routenkorridors (108) an jeder der Referenzpositionen von einem Druck abhängt, der beim Führen des ersten Eingabemittels an dem der Referenzposition zugeordneten Punkt mit dem ersten Eingabemittel auf den Berührungsbildschirm ausgeübt wurde.

2. Verfahren gemäß Anspruch 1,
bei dem die Breite des Routenkorridors (208) vermindert wird, wenn der Druck erhöht wird und die Breite des Routenkorridors (208) vergrößert wird, wenn der Druck vermindert wird, oder die Breite des Routenkorridors vergrößert wird, wenn der Druck erhöht wird und die Breite des Korridors vermindert wird, wenn der Druck vermindert wird.

3. Verfahren gemäß einem der vorhergehenden Ansprüche,
bei dem das entlang der Eingabelinie (403) geführte erste Eingabemittel an einer Stelle des Landkartenausschnitts (425) gestoppt wird, sodass der Maßstab vergrößert wird, in welchem der Landkartenausschnitt angezeigt wird, wobei das erste Eingabemittel an der Stelle (425) des Landkartenausschnitts verbleibt, an der das erste Eingabemittel gestoppt wurde.

4. Verfahren gemäß einem der Ansprüche 1 und 2,
bei dem das entlang der Eingabelinie geführte erste Eingabemittel an einer Stelle des Landkartenausschnitts gestoppt wird und ein zweites Eingabemittel auf dem Berührungsbildschirm verschoben wird, ohne das erste Eingabemittel zu verschieben, sodass der Maßstab verändert wird, in welchem der Landkartenausschnitt angezeigt wird, wobei das erste Eingabemittel an der Stelle des Landkartenausschnitts verbleibt, an der das erste Eingabemittel gestoppt wurde.

5. Verfahren gemäß einem der vorhergehenden Ansprüche,
bei dem eine Vergleichsroute berechnet wird, welche von der Position der Navigationseinrichtung (501) zu der Zielposition (506) führt, die Route mit der Vergleichsroute verglichen wird, sodass ein Vergleichsergebnis bereitgestellt wird, unter Verwendung des Vergleichsergebnisses eine Routenoption eingestellt wird und die Routenoption als Voreinstellung für eine spätere Routenberechnung gespeichert wird.

6. Verfahren gemäß einem der vorhergehenden Ansprüche,
bei dem auf der Eingabelinie (303) angeordnete Eingabelinienpunkte (311 bis 323) definiert werden, jedem der Eingabelinienpunkte (311 bis 323) eine auf der Referenzlinie (307) angeordnete Referenzposition zugeordnet wird und die Route derart berechnet wird, dass die Route die Referenzpositionen in der gleichen Reihenfolge passiert, in welcher das erste Eingabemittel die entsprechenden Eingabelinienpunkte (311 bis 323) passiert hat.

7. Verfahren gemäß einem der vorhergehenden Ansprüche,
bei dem ein zweites Eingabemittel auf den Berührungsbildschirm aufgesetzt wird und das an einer Stelle des Landkartenausschnitts positionierte erste Eingabemittel auf dem Berührungsbildschirm verschoben wird, sodass der angezeigte Landkartenausschnitt entsprechend verschoben wird, wobei das erste Eingabemittel an der Stelle des Landkartenausschnitts verbleibt, an der das erste Eingabemittel positioniert war.

8. Verfahren gemäß einem der vorhergehenden Ansprüche,
bei dem, wenn der Eingabeendpunkt (104) in einem auf dem Berührungsbildschirm angezeigten Symbol angeordnet ist, welches eine Gemeinde repräsentiert, die Zielposition (106) derart bestimmt wird, dass die Zielposition (106) in einem Zentrum der Gemeinde angeordnet wird.

9. Verfahren gemäß einem der Ansprüche 1 bis 7,
bei dem, wenn der Eingabeendpunkt (104) in einem auf dem Berührungsbildschirm angezeigten Symbol angeordnet ist, welches eine Gemeinde repräsentiert, die Zielposition (106) derart bestimmt wird, dass auf dem Berührungsbildschirm eine oder mehrere Adressen der Gemeinde angezeigt werden und eine der Adressen ausgewählt wird.

10. Verfahren gemäß einem der vorhergehenden Ansprüche,
bei dem, wenn der Eingabeendpunkt (304) nicht innerhalb eines auf dem Berührungsbildschirm angezeigten Symbols angeordnet ist, welches eine Gemeinde repräsentiert, und eine dem Eingabeendpunkt (304) zugeordnete Referenzposition in einem befahrbaren Bereich angeordnet ist, die Zielposition (306) derart bestimmt wird, dass die Zielposition (306) mit der dem Eingabeendpunkt (304) zugeordneten Referenzposition gleichgesetzt wird.

11. Verfahren gemäß einem der vorhergehenden Ansprüche,
bei dem, wenn der Eingabeendpunkt nicht innerhalb eines auf dem Berührungsbildschirm angezeigten Symbols angeordnet ist, welches eine Gemeinde repräsentiert, und eine dem Eingabeendpunkt zugeordnete Referenzposition nicht in einem befahrbaren Bereich angeordnet ist, die Zielposition derart bestimmt wird, dass die Zielposition in einem befahrbaren Bereich angeordnet wird, welcher bezüglich der dem Eingabeendpunkt zugeordneten Referenzposition der nächstgelegene befahrbare Bereich ist.

12. Verfahren gemäß einem der vorhergehenden Ansprüche,
bei dem der Routenkorridor (108) oder die Referenzlinie (107) zumindest teilweise auf dem Berührungsbildschirm angezeigt wird, während das erste Eingabemittel auf dem Berührungsbildschirm entlang der Eingabelinie (103) geführt wird.

13. Navigationseinrichtung, welche aufweist:
eine Positionsbestimmungseinheit, die zum Bestimmen einer Position der Navigationseinrichtung (101) eingerichtet ist,
einen Berührungsbildschirm, der zum Anzeigen eines Landkartenausschnitts (100) und zum Führen eines ersten Eingabemittels auf dem Berührungsbildschirm von einem Eingabestartpunkt (102) entlang einer Eingabelinie (103) zu einem Eingabeendpunkt (104) eingerichtet ist, und
eine Recheneinheit, die zum Definieren einer Referenzlinie (107), welche in dem vom Landkartenausschnitt (100) repräsentierten Gebiet verläuft und als Aneinanderreihung einer unendlichen Anzahl von Referenzpositionen ausgebildet ist, denen jeweils ein Punkt auf der Eingabelinie (103) derart zugeordnet ist, dass geografische Koordinaten, welche die Lage der Referenzposition in dem Gebiet spezifizieren, auf lokale Koordinaten, welche die Lage des Punktes auf dem Berührungsbildschirm spezifizieren, abbildbar sind, zum Definieren eines entlang der Referenzlinie (107) verlaufenden Routenkorridors (108), sodass die Referenzlinie (107) innerhalb des Routenkorridors (108) und etwa in der Mitte des Routenkorridors (108) verläuft, zum Bestimmen einer Zielposition (106) unter Verwendung des Eingabeendpunktes und zum Berechnen einer Route eingerichtet ist, sodass die Route von der Position der Navigationseinrichtung (101) zu der Zielposition (106) führt und entlang der Referenzlinie (107) innerhalb des Routenkorridors (108) verläuft, dadurch charakterisiert, dass
die Breite des Routenkorridors (108) an jeder der Referenzpositionen von einem Druck abhängt, der beim Führen des ersten Eingabemittels an dem der Referenzposition zugeordneten Punkt mit dem ersten Eingabemittel auf den Berührungsbildschirm ausgeübt wurde.

## Claims

1. Method for determining a route by a navigation device comprising a touch screen, the method comprising the steps of:
determining a position of the navigation device (101),
displaying a map section (100) on the touch screen,
moving a first input means on the touch screen from an input starting point (102) along an input line (102) to an input final point (104),
defining a reference line (107) running within the area represented by the map section (100) wherein the reference line (107) is designed as a sequence of an infinite number of reference positions wherein a point on the input line (103) is assigned to each of the reference positions a in such a way that geographical coordinates specifying the location of the reference position in the area can be mapped to local coordinates specifying the location of the point on the touch screen,
defining a route corridor (108) running along the reference line (107) in such a way that the reference line (107) is running within the route corridor (108) and approximately in the middle of the route corridor (108),
determining a target position (106) using the input final point (104), and
calculating the route in such a way that the route runs from the position of the navigation device (101) to the target position (106) and along the reference line (107) within the route corridor (108),
**characterized in that**
the width of the route corridor (108) on each of the reference positions depends on a pressure which was applied by the first input means to the touch screen on the point assigned to the reference position when the first input means was moved.

2. Method according to claim 1
wherein the width of the route corridor (108) is decreased if the pressure is increased and the width of the route corridor (108) is increased if the pressure is decreased, or the width of the route corridor (108) is increased if the pressure is increased and the width of the route corridor (108) is decreased if the pressure is decreased.

3. Method according to one of the preceding claims
wherein the first input means moved along the input line (403) is stopped at a place of the map section (425) in such a way that the scale in which the map section (425) is displayed is increased wherein the first input means remains at the place of the map section (425) where the first input means was stopped.

4. Method according to one of the claims 1 and 2
wherein the first input means moved along the input line is stopped at a place of the map section and a second input means is moved on the touch screen, without moving the first input means, in such a way that the scale in which the map section is displayed is changed wherein the first input means remains at the place of the map section where the first input means was stopped.

5. Method according to one of the preceding claims
wherein a comparative route is calculated which runs from the position of the navigation device (501) to the target position (506), the route is compared with the comparative route in such a way that a comparative result is provided, a route option is set using the comparative result and the route option is saved as a default for a later route calculation.

6. Method according to one of the preceding claims
wherein input line points (311 to 323) arranged on the input line (303) are defined, a reference position arranged on the reference line (307) is assigned to each of the input line points (311 to 323), and the route is calculated in such a way that the route passes the reference positions in the same order in which the first input means did pass the corresponding input line points (311 to 323).

7. Method according to one of the preceding claims
wherein a second input means is placed onto the touch screen and the first input means positioned at a place of the map section is moved on the touch screen in such a way that the displayed map section is moved accordingly wherein the first input means remains at the place of the map section where the first input means was positioned.

8. Method according to one of the preceding claims
wherein, if the input final point (104) is arranged in a symbol displayed on the touch screen which represents a municipality, the target position (106) is determined in such a way that the target position (106) is arranged in a centre of the municipality.

9. Method according to one of the claims 1 to 7,
wherein, if the input final point (104) is arranged in a symbol displayed on the touch screen which represents a municipality, the target position (106) is determined in such a way that one or multiple addresses of the municipality are displayed on the touch screen and one of the addresses is chosen.

10. Method according to one of the preceding claims
wherein, if the input final point (304) is not arranged in a symbol displayed on the touch screen which represents a municipality and a reference position assigned to the input final point (304) is arranged in a drivable region, the target position (306) is determined in such a way that the target position (306) is equated with the reference position assigned to the input final point (304).

11. Method according to one of the preceding claims
wherein, if the input final point is not arranged in a symbol displayed on the touch screen which represents a municipality and a reference position assigned to the input final point is not arranged in a drivable region, the target position is determined in such a way that the target position is arranged in a drivable region which is the nearest drivable region with regard to the reference position assigned to the input final point.

12. Method according to one of the preceding claims
wherein the route corridor (108) or the reference line (107) is displayed at least partially on the touch screen when the first input means is moved on the touch screen along the input line (103).

13. Navigation device comprising:
a positioning unit designed for determining a position of the navigation device (101),
a touch screen designed for displaying a map section (100) and moving a first input means on the touch screen from an input starting point (102) along an input line (103) to an input final point (104), and
a processing unit designed for defining a reference line (107) running within the area represented by the map section (100) wherein the reference line (107) is designed as a sequence of an infinite number of reference positions wherein a point on the input line (103) is assigned to each of the reference positions in such a way that geographical coordinates specifying the location of the reference position in the area can be mapped to local coordinates specifying the location of the point on the touch screen, defining a route corridor (108) running along the reference line (107) in such a way that the reference line (107) is running within the route corridor (108) and approximately in the middle of the route corridor (108), determining a target position (106) using the input final point (104), and calculating the route in such a way that the route runs from the position of the navigation device (101) to the target position (106) and along the reference line (107) within the route corridor (108),
**characterized in that** the width of the route corridor (108) on each of the reference positions depends on a pressure which was applied by the first input means to the touch screen on the point assigned to the reference position when the first input means was moved.

## Revendications

1. Procédé permettant de déterminer un itinéraire au moyen d'un dispositif de navigation à écran tactile, le procédé étant composé des étapes suivantes :
détermination d'une position du dispositif de navigation (101),
affichage d'un extrait de carte géographique (100) sur l'écran tactile,
déplacement d'un premier moyen de saisie sur l'écran tactile depuis un point de départ de saisie (102), le long d'une ligne de saisie (103), jusqu'à un point final de saisie (104),
définition d'une ligne de référence (107) située dans la région représentée par l'extrait de carte géographique (100) et constituée d'une juxtaposition d'un nombre infini de positions de référence, un point étant attribué à chacune d'elles sur la ligne de saisie (103) de sorte que les coordonnées géographiques spécifiant la position de la position de référence dans la région puissent être converties en coordonnées locales spécifiant la position du point sur l'écran tactile,
définition d'un couloir d'itinéraire (108) situé le long de la ligne de référence (107) de sorte que la ligne de référence (107) se situe à l'intérieur du couloir d'itinéraire (108) et à peu près au milieu du couloir d'itinéraire (108),
détermination d'une position de destination (106), utilisant le point final de saisie (104), et
calcul de l'itinéraire, de sorte que l'itinéraire mène de la position du dispositif de navigation (101) à la position de destination (106) et se situe le long de la ligne de référence (107) et à l'intérieur du couloir d'itinéraire (108), **caractérisé en ce que**
la largeur du couloir d'itinéraire (108) est fonction, à chacune des positions de référence, de la pression ayant été exercée avec le premier moyen de saisie sur l'écran tactile, au point attribué à la position de référence, lors du déplacement du premier moyen de saisie.

2. Procédé selon la revendication 1,
**caractérisé en ce que** la largeur du couloir d'itinéraire (208) diminue lorsque la pression augmente et que la largeur du couloir d'itinéraire (208) augmente lorsque la pression diminue, ou que la largeur du couloir d'itinéraire augmente lorsque la pression augmente et que la largeur du couloir diminue lorsque la pression diminue.

3. Procédé selon l'une des revendications précédentes,
**caractérisé en ce que** le premier moyen de saisie déplacé le long de la ligne de saisie (403) est arrêté à un endroit de l'extrait de carte géographique (425) de manière à agrandir l'échelle à laquelle l'extrait de carte géographique est affiché, le premier moyen de saisie restant à l'endroit (425) de l'extrait de carte géographique, auquel le premier moyen de saisie a été arrêté.

4. Procédé selon l'une des revendications 1 et 2,
**caractérisé en ce que** le premier moyen de saisie déplacé le long de la ligne de saisie est arrêté à un endroit de l'extrait de carte géographique et qu'un deuxième moyen de saisie est déplacé sur l'écran tactile sans déplacement du premier moyen de saisie de manière à modifier l'échelle à laquelle l'extrait de carte géographique est affiché, le premier moyen de saisie restant à l'endroit de l'extrait de carte géographique, auquel le premier moyen de saisie a été arrêté.

5. Procédé selon l'une des revendications précédentes,
**caractérisé en ce qu'**un itinéraire de comparaison menant de la position du dispositif de navigation (501) à la position de destination (506) est calculé, que l'itinéraire est comparé à l'itinéraire de comparaison de manière à fournir un résultat de comparaison, que le résultat de comparaison est utilisé pour régler une option d'itinéraire et que l'option d'itinéraire est enregistrée comme réglage par défaut pour un calcul d'itinéraire ultérieur.

6. Procédé selon l'une des revendications précédentes,
**caractérisé en ce que** des points de ligne de saisie (311 à 323) sont définis le long de la ligne de saisie (303), qu'une position de référence située sur la ligne de référence (307) est attribuée à chacun des points de ligne de saisie (311 à 323) et que l'itinéraire est calculé de sorte que l'itinéraire passe par les positions de référence dans l'ordre dans lequel le premier moyen de saisie est passé par les points de ligne de saisie (311 à 323) correspondants.

7. Procédé selon l'une des revendications précédentes,
**caractérisé en ce qu'**un deuxième moyen de saisie est appliqué sur l'écran tactile et que le premier moyen de saisie placé à un endroit de l'extrait de carte géographique est déplacé sur l'écran tactile de manière à décaler en conséquence l'extrait de carte géographique affiché, le premier moyen de saisie restant à l'endroit de l'extrait de carte géographique, auquel le premier moyen de saisie était placé.

8. Procédé selon l'une des revendications précédentes,
**caractérisé en ce que**, lorsque le point final de saisie (104) est placé dans un symbole affiché sur l'écran tactile et représentant une commune, la position de destination (106) est déterminée de sorte que la position de destination (106) soit placée dans un centre de la commune.

9. Procédé selon l'une des revendications 1 à 7,
**caractérisé en ce que**, lorsque le point final de saisie (104) est placé dans un symbole affiché sur l'écran tactile et représentant une commune, la position de destination (106) est déterminée de sorte qu'une ou plusieurs adresses de la commune s'affichent sur l'écran tactile et qu'une adresse soit sélectionnée.

10. Procédé selon l'une des revendications précédentes,
**caractérisé en ce que**, lorsque le point final de saisie (304) n'est pas placé à l'intérieur d'un symbole affiché sur l'écran et représentant une commune, et que la position de référence attribuée au point final de saisie (304) se trouve dans une zone accessible à la circulation, la position de destination (306) est déterminée de sorte que la position de destination (306) corresponde à la position de référence attribuée au point final de saisie (304).

11. Procédé selon l'une des revendications précédentes,
**caractérisé en ce que**, lorsque le point final de saisie n'est pas placé à l'intérieur d'un symbole affiché sur l'écran et représentant une commune, et que la position de référence attribuée au point final de saisie ne se trouve pas dans une zone accessible à la circulation, la position de destination est déterminée de sorte que la position de destination se trouve dans la zone accessible à la circulation la plus proche de la position de référence attribuée au point final de saisie.

12. Procédé selon l'une des revendications précédentes,
**caractérisé en ce que** le couloir d'itinéraire (108) ou la ligne de référence (107) sont affichés au moins partiellement sur l'écran tactile pendant que le premier moyen de saisie est déplacé sur l'écran tactile le long de la ligne de saisie (103).

13. Dispositif de navigation comportant :
une unité de définition de position configurée pour déterminer la position du dispositif de navigation (101),
un écran tactile configuré pour afficher un extrait de carte géographique (100) et déplacer un premier moyen de saisie sur l'écran tactile depuis un point de départ de saisie (102), le long d'une ligne de saisie (103), jusqu'à un point final de saisie (104), et
une unité de calcul configurée pour la définition d'une ligne de référence (107) située dans la région représentée par l'extrait de carte géographique (100) et constituée d'une juxtaposition d'un nombre infini de positions de référence, un point étant attribué à chacune d'elles sur la ligne de saisie (103) de sorte que les coordonnées géographiques spécifiant la position de la position de référence dans la région puissent être converties en coordonnées locales spécifiant la position du point sur l'écran tactile, pour la définition d'un couloir d'itinéraire (108) situé le long de la ligne de référence (107) de sorte que la ligne de référence (107) se situe à l'intérieur du couloir d'itinéraire (108) et à peu près au milieu du couloir d'itinéraire (108), pour la détermination d'une position de destination (106), utilisant le point final de saisie, et pour le calcul d'un itinéraire, de sorte que l'itinéraire mène de la position du dispositif de navigation (101) à la position de destination (106) et se situe le long de la ligne de référence (107) et à l'intérieur du couloir d'itinéraire (108), **caractérisé en ce que**
la largeur du couloir d'itinéraire (108) est fonction, à chacune des positions de référence, de la pression ayant été exercée avec le premier moyen de saisie sur l'écran tactile, au point attribué à la position de référence, lors du déplacement du premier moyen de saisie.
